# EUROPÄISCHE PATENTSCHRIFT

(11) **EP 2 945 242 B1**
(45) Veröffentlichungstag und Bekanntmachung des Hinweises auf die Patenterteilung: **01.07.2020**
(21) Anmeldenummer: 15167549.3
(22) Anmeldetag: 13.05.2015
(51) Int. Cl.: H02H 7/12, F03D 9/25, H02M 1/32, H02M 1/42, H02J 3/18, H02J 3/12, H02J 3/38, H02M 5/458

(54) **WINDENERGIEANLAGE MIT VERBESSERTEM ÜBERSPANNUNGSSCHUTZ**
WIND TURBINE WITH IMPROVED OVERVOLTAGE PROTECTION
ÉOLIENNE DOTÉE D'UNE PROTECTION AMÉLIORÉE CONTRE LES SURTENSIONS

(30) Priorität: 16.05.2014 DE 102014209332
(43) Veröffentlichungstag der Anmeldung: 18.11.2015
(73) Patentinhaber: Senvion GmbH, 22297 Hamburg (DE)
(72) Erfinder: Letas, Heinz-Hermann, 24796 Bovenau (DE); Pingel, Steffen, 24649 Wiemersdorf (DE)
(74) Vertreter: Glawe, Delfs, Moll

(56) Entgegenhaltungen:
- EP-A2- 1 921 738
- EP-A2- 2 169 222
- WO-A1-2012/083963
- WO-A2-2012/076015
- DE-A1-102007 017 870
- DE-A1-102012 218 889

## Beschreibung

Windenergieanlage mit einem Windrotor, einem Generator, der von dem Windrotor angetrieben ist, und einem Umrichter zur Erzeugung elektrischer Energie, die über eine Anschlussleitung mit einer induktiv wirkenden Netzdrossel an ein Netz abgegeben wird, wobei ein Überspannungsschutzgerät vorgesehen ist.

Mit zunehmender Verbreitung von Windenergieanlagen werden auch erhöhte Anforderungen an ihr Verhalten am Netz gestellt. Dies gilt auch für das Verhalten der Windenergieanlage bei Netzstörungen, insbesondere dem Auftreten von Überspannungen oder Spannungsspitzen. Bisher haben die Windenergieanlagen häufig beim Auftreten von Spannungsspitzen aus Gründen des Eigenschutzes abgeschaltet. Jedoch wird ein solches Verhalten im Hinblick auf die Netzverträglichkeit künftig nicht mehr voll akzeptiert werden. Es wird bereits verlangt, dass Windenergieanlagen Überspannungen bis zu einem Wert von 130% der Nennspannung vertragen. Zukünftig sind zumindest in einigen Ländern auch verschärfte Anforderungen zu erwarten.

Herkömmliche Windenergieanlagen weisen keine ausreichenden Reserven für entsprechend erhöhte Anforderungen in Bezug auf die Überspannung auf. Zwar ist es grundsätzlich möglich, die stromführenden Komponenten und insbesondere den Umrichter leistungsmäßig höher auszulegen. Da hier aber Überleistungen von ca. 25% berücksichtigt werden müssen, führt dies zu erheblichen Steigerungen hinsichtlich Baugröße und Baukosten des Umrichters. Im Übrigen macht eine derartige Vergrößerung des Umrichters häufig eine neue Auslegung der Windenergieanlage und ihres elektrischen Systems insgesamt erforderlich. Der Aufwand steigt dadurch noch weiter an.

Aus EP 2 169 222 A2 ist ein Überspannungsschutzgerät bekannt, das an der Anschlussleitung der Windenergieanlage eine Leistungsverzweigung vorsieht mit einer mehrstufig zuschaltbaren Drossel. Mit höherer Stufe wird hierbei eine weitere/stärkere Drossel zugeschaltet, und so die Drosselwirkung erhöht.

Aus der WO 2012/076015 A2 ist bekannt, eine Windenergieanlage dadurch vor Schäden durch Überspannung zu schützen, indem zwischen Generator und Umrichter ein Ableitungswiderstand ("AC Dump Load") geschaltet ist. Dieser wird bei Überspannung zugeschaltet und der reguläre Schaltbetrieb des Umrichters beendet, und nach einer gewissen Wartezeit wieder zugschaltet. Im Grunde bedeutet dies eine temporäre Abschaltung der Windenergieanlage, bis die Überspannungssituation vorbei ist.

Hingegen ist aus der DE 10 2007 017 870 A1 bekannt, bei einer Überspannung die Trennung der Windenergieanlage vom Netz dadurch hinauszuzögern, dass zusätzlich Blindleistung einspeist wird. Mit der Blindleistung soll der Überspannung entgegengewirkt werden. Gelingt dies mit dieser Maßnahme nicht, wird die Windenergieanlage abgeschaltet.

Der Erfindung liegt die Aufgabe zugrunde, eine verbesserte Überspannungsschutzeinrichtung bereitzustellen, welche höhere Überspannungsfestigkeiten auf effizientere Weise erreicht.

Diese Aufgabe wird erfindungsgemäß durch eine Windenergieanlage nach Anspruch 1 gelöst.

Bei einer Windenergieanlage mit einem Windrotor, einem Generator, der von dem Windrotor angetrieben ist, und einem Umrichter, wobei der Generator und der Umrichter zur Erzeugung elektrischer Energie ausgebildet sind, die über eine Anschlussleitung mit einer induktiv wirkenden Netzdrossel an ein Netz abgegeben wird, wobei ein Überspannungsschutzgerät vorgesehen ist, ist erfindungsgemäß das Überspannungsschutzgerät so ausgebildet, dass es mehrere unterschiedliche Wirkmodule umfasst, die so ausgebildet sind, dass sie auf voneinander verschiedene Weise jeweils eine Senkung der Spannung am Ausgang des Umrichters bewirken, wobei sich die Wirkmodule hinsichtlich ihrer Funktionsweise unterscheiden, eine Schaltmatrix, welche die unterschiedlichen Wirkmodule im Überspannungsbereich zu- und abschaltet, ein Überspannungsklassifikator zur Erfassung der Spannung an der Anschlussleitung, wobei der Überspannungsklassifikator ausgebildet ist, die erfasste Spannung einem von mehreren Überspannungsbereichen zuzuordnen, und einen Selektor, der dazu ausgebildet ist, je nach Überspannungsbereich Schaltgruppen anzusteuern, welche Schaltgruppen ausgebildet sind, entsprechende Zu- und Abschaltsignale über die Schaltmatrix an die Wirkmodule auszugeben um festzulegen, welche Wirkmodule in welchem Überspannungsbereich aktiviert bzw. deaktiviert sind.

Unter Überspannungsbereichen werden Spannungsbereiche oberhalb der Nennspannung verstanden, die sich über jeweils vorab bestimmte Abschnitte erstrecken. So kann beispielsweise ein erster Überspannungsbereich zwischen 116 und 130% der Netzspannung liegen, ein zweiter Überspannungsbereich zwischen 130 und 145%, und schließlich ein dritter Überspannungsbereich zwischen 145 und 170%.

Unter Wirkmodule werden solche Baueinheiten verstanden, die jeweils für sich genommen eine Erhöhung der Überspannungsfestigkeit der Windenergieanlage selbst bewirken.

Die Erfindung ermöglicht durch die selektive Schaltung verschiedener Wirkmodule, dass verschiedene Ansätze zur Erhöhung der Überspannungsfestigkeit miteinander kombiniert werden. Dadurch tritt ein kombinatorischer Effekt auf, der es ermöglicht, auch erhöhte Anforderungen an die Überspannungsfestigkeit bei Spannungsspitzen, bis hin zu beispielsweise 170% der Netzspannung, auf dieser Basis zu bewältigen, ohne dass dazu eine leistungsmäßige höhere Auslegung des Umrichters erforderlich wäre. Es können also die bisher verwendeten Umrichter weiter verwendet werden. Dadurch wird erheblicher Aufwand eingespart. Die Erfindung erreicht dies durch das innovative Zusammenwirken verschiedener, teilweise an sich bekannter Maßnahmen. Im Stand der Technik findet sich hierfür kein Beispiel.

Die Erfindung erreicht damit nicht nur eine hohe Überspannungstoleranz, sondern ermöglicht es, die wesentlichen Kernkomponenten der Windenergieanlage, insbesondere deren Umrichter, unverändert zu belassen. Weiter erlaubt sie eine abgestufte Reaktion je nach Schwere der Überspannungssituation (Überspannungsbereich). Überdies ist das Verhalten der Windenergieanlage gegenüber dem Netz transparent, d.h. aus Sicht des Netzes verhält sich die Windenergieanlage vollkommen unauffällig, so als ob sie die geforderte Spannungsfestigkeit aufgrund eines höher ausgelegten Umrichters aufweist. Insgesamt ergibt sich somit ein viel effektiverer Schutz der Windenergieanlage vor Überspannungen, verglichen mit den bisher entweder nicht ausreichenden Maßnahmen oder ausgesprochen teuren Maßnahmen, wie einer erheblichen Überauslegung des Umrichters.

Vorzugsweise ist der Selektor so ausgebildet, dass mindestens zwei, vorzugsweise drei verschiedene Überspannungsstufen schaltbar sind. Damit kann als erster Überspannungsbereich der bereits bisher verwendete Überspannungsbereich von 116% (Ende des Toleranzbands um die Nennspannung) bis hin zu 130% vorgesehen sein. Daran schließt sich an ein erweiterter Überspannungsbereich von 130% bis 145%. An diese wiederum schließt sich ein Überlebensbereich an, in dem der Eigenschutz der Windenergieanlage Vorrang hat, bis etwa 170%. Damit sind die Anforderungen praktisch aller relevanten Länder abgedeckt und es wird auch eine ausreichende Eigensicherung der Windenergieanlage erreicht, bei nach wie vor minimalem Zusatzaufwand. Zweckmäßigerweise sind der Selektor und die Schaltmatrix kombiniert ausgeführt. Dies ermöglicht eine besonders kompakte Bauweise. Ein Beispiel hierfür ist eine Ausführung als ein Stufenschalter.

Mit Vorteil ist eines der Wirkmodule ausgebildet als ein Reduktionsglied zur Reduktion der abgegebenen Wirkleistung der Windenergieanlage, und zwar erst ab mindestens einem zweiten Überspannungsbereich. Damit wird erreicht, dass bei höheren Überspannungen (im erweiterten Überspannungsbereich oder gar erst im Überlebensbereich) die von der Windenergieanlage abgegebene Wirkleistung reduziert wird. Der so von der Abgabe von Wirkleistung entlastete Umrichter kann dann entsprechend mehr Blindleistung abgeben. Vorzugsweise erfolgt dies graduell. Dazu ist zweckmäßigerweise eine Stromstatik implementiert, wobei der abgegebene Wirkstrom mit steigender Spannung zunehmend reduziert wird.

Ein anderes der Wirkmodule ist vorzugsweise dazu ausgebildet, als ein veränderlicher Limiter für eine kapazitive Blindleistungsabgabe zu fungieren. Unter einem veränderlichen Limiter wird hier verstanden, dass je nach Überspannungsbereich eine zulässige Obergrenze für die kapazitive Blindleistungsabgabe definiert und mit zunehmend steigender Spannung abgesenkt wird. Vorzugsweise weist der Limiter hierzu eine Begrenzungsstatik auf. Damit kann beim Auftreten von Überspannung die Abgabe kapazitiver Blindleistung bis auf null (oder einen anderen einstellbaren Unterwert) abgesenkt werden. Mit dieser Maßnahme wird spannungssenkend auf den netzseitigen Wechselrichter eingewirkt.

Mit Vorteil weist ein anderes der Wirkmodule eine Überstromsteuerung auf, welche eine erhöhte induktive Blindleistungsabgabe einstellt, die vorzugsweise über der Nenn-Blindleistungsabgabe liegt. Damit macht sich das Wirkmodul die Erkenntnis zunutze, dass durch die Abgabe von induktiver Blindleistung eine Spannungssenkung erreicht werden kann. Der damit erreichte Umfang hängt ab von der Dimensionierung der Drossel und des Transformators in der Anschlussleitung. Vorzugsweise ist die Drossel so bemessen, dass der Stromfluss durch sie am oberen Ende des erweiterten Überspannungsbereichs maximal das 1,6-fache, vorzugsweise höchstens des 1,1-fachen des Nennstroms des netzseitigen Wechselrichters beträgt. Hierbei kann in einer zweiten Stufe für den Überlebensspannungsbereich die erhöhte induktive Blindleistung so dimensioniert sein, dass sie mindestens das Doppelte, vorzugsweise mindestens das Vierfache, der Nenn-Blindleistungsabgabe beträgt.

Eines der Wirkmodule ist vorzugsweise als eine Spannungsstatik für einen Sollspannungsschieber in einem Zwischenkreis des Umrichters ausgebildet. Damit kann der Selektor im gewünschten Überspannungsbereich die Zwischenkreisspannung im Umrichter planvoll anheben. Vorzugsweise erfolgt die Anhebung überproportional, d.h. wenn die Anhebung erfolgt, dann erfolgt sie im größeren Umfang als die Steigerung der Netzspannung. Durch die Anhebung der Zwischenkreisspannung wird erreicht, dass die von dem netzseitigen Wechselrichter des Umrichters an das Netz abgegebene Spannung ebenfalls ansteigen kann. Die Windenergieanlage kann sich somit an die erhöhte Spannung im Netz anpassen.

Vorzugsweise ist eines der Wirkmodule ausgebildet als ein Übermodulationsglied, welches die vom Umrichter, genauer gesagt dessen netzseitigen Wechselrichter, abgegebene Spannung erhöht. Mit dem Übermodulationsglied kann insbesondere in hohen Spannungsbereichen (Überlebensbereiche) durch kurzzeitige Übermodulation die Ausgangsspannung des netzseitigen Wechselrichters weiter erhöht und damit an die erhöhte Netzspannung angepasst werden. Bewährt haben sich hierfür Übermodulationsgrade, die mindestens 5%, vorzugsweise bis zu 7% Spannungsanhebung bewirken können. So wird einerseits eine beträchtliche Anhebung der Ausgangsspannung erreicht, und andererseits eine übermäßige Erhöhung des Klirrfaktors und damit eine übermäßige Strombelastung noch verhindert. Vorzugsweise ist der Klirrfaktor auf einen Wert von höchstens 20% eingestellt.

Zur Steuerung des Übermodulationsglieds ist vorzugsweise eine Spannungsstatik vorgesehen. Sie ist zweckmäßigerweise in mehrere Bereiche unterteilt. Damit kann je nach Überspannungsbereich ein unterschiedliches Verhalten festgelegt sein. Mit Vorteil erfolgt dies bereits im ersten Überspannungsbereich, und zwar in einem überproportionalen Umfang. Dazu ist eine Kennliniensteigung größer als eins (überproportional) in der Spannungsstatik implementiert. Vorzugsweise ist sie Teil einer Rampenfunktion, welche in einem anderen Überspannungsbereich einen dann erhöhten konstanten Wert aufweist.

Zweckmäßigerweise weist das Reduktionsglied ferner einen Steuerausgang zur Aktivierung eines Choppers am Zwischenkreis auf. Die Aktivierung kann direkt oder indirekt erfolgen. Unter "indirekt" wird verstanden, dass das Reduktionsglied den Chopper nicht direkt aktiviert, sondern Schaltschwellen bzw. Grenzwerte der an sich vorhandenen Choppersteuerung modifiziert werden und damit dessen Einsatzverhalten in gewünschter Weise verändert wird. Damit kann das Reduktionsglied zusätzlich auch zumindest kurzfristig Leistung in den Chopper abführen, um so den Zwischenkreis zu entlasten. Die Strombelastung des netzseitigen Wechselrichters wird so weiter verringert bzw. er kann entsprechend mehr Blindstrom und damit Blindleistung abgeben.

Weiter kann vorgesehen sein, dass vorzugsweise bei einer Netzfrequenz unterhalb einer Nenn-Netzfrequenz eine Maximalspannung verringert wird. Damit ist eine günstigere magnetische Auslegung des Transformators der Windenergieanlage ermöglicht. Weiter ist vorzugsweise ein Zusammenwirken mit dem Überspannungsklassifikator in der Weise vorgesehen, dass bei abgesenkter Maximalspannung die Klassifikation mit entsprechend verringerten Werten erfolgt. Damit wird die Klassifikation nachgeführt in Bezug auf die verringerte Maximalspannung, und so weiterhin eine feinfühlig abgestufte Reaktion sichergestellt.

Vorzugsweise ist der Anlagentransformator in der Anschlussleitung der Windenergieanlage so bemessen, dass er bei Netzfrequenzen unterhalb einer Nenn-Netzfrequenz magnetisch gesättigt ist im Überspannungsbereich. Mit einem so derart ausgelegten Transformator wird erreicht, dass er sich beim Auftreten von Überspannungen durch zusätzlichen Sättigungsstrom wie eine induktive Drossel verhält, und damit automatisch sozusagen passiv-spannungssenkend wirkt. Der Transformator greift damit selbsttätig stabilisierend ein. Wegen seiner erheblichen Induktivität wird damit ohne Zusatzaufwand ein beträchtlicher Beitrag zur Spannungssenkung erzielt. Ein gewisser Nachteil besteht zwar darin, dass der Ansetzpunkt für seine spannungssenkende Wirkung wegen der Frequenzabhängigkeit nicht ganz genau festzulegen ist, jedoch ist dies im Hinblick auf die damit erreichten Vorteile nicht gravierend.

Weiter vorzugsweise ist der Anlagentransformator ausgelegt für eine abgesenkte Hauptfeldspannung. Damit kann der Anlagentransformator kleiner dimensioniert sein, so dass er letztlich sogar kostengünstiger ist.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1: ein Windpark in einer Übersichtsdarstellung mit einer Windenergieanlage gemäß einem Ausführungsbeispiel der Erfindung;
- Fig. 2: ein Blockschaltbild zu der Windenergieanlage;
- Fig. 3: eine Detailansicht zu einem Selektor mit einem Überspannungsklassifikator;
- Fig. 4: ein Beispiel für Überspannungsbereiche;
- Fig. 5: Schaltstufen des Selektors für Wirkmodule;
- Fig. 6a, b: Diagramm zu einem Wirkmodul zur Wirkleistungsreduktion;
- Fig. 7: Diagramme zu einem Limiter für kapazitive Blindleistung;
- Fig. 8a, b: Diagramme zu einem Wirkmodul zur Zusatzblindleistungseinspeisung;
- Fig. 9: Diagramme zu einem Wirkmodul für eine Anhebung der Zwischenkreisspannung und der Ausgangsspannung eines netzseitigen Wechselrichters;
- Fig. 10a, b: Diagramme zum Wirkmodul für eine Übermodulation;
- Fig. 11a, b: Diagramme zu wirksamen Spannungsverläufen ohne und mit Übermodulation;
- Fig. 12a, b: Diagramme zu einer vom Umrichter ans Netz abgegebenen wirksamen Spannung und zu Stromoberschwingungen;
- Fig. 13a-c: Diagramme zur Auslegung einer Netzdrossel; und
- Fig. 14a, b: Diagramme zum Netzstrom und zum von der Windenergieanlage abgegebenen Strom für die Überspannungsbereiche.

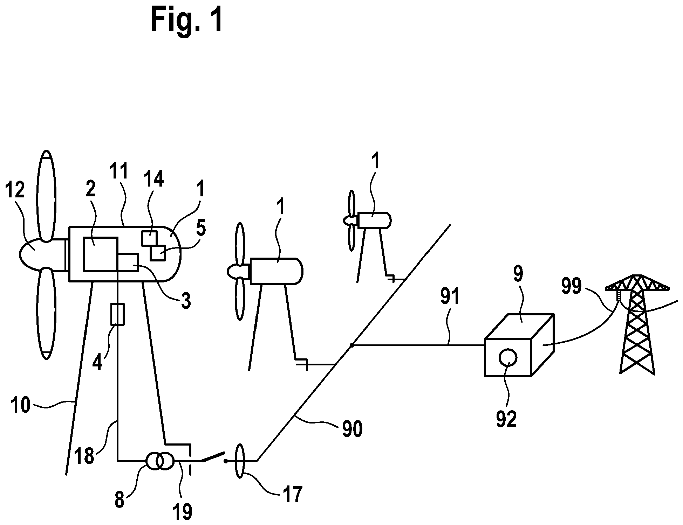

Ein in dem Ausführungsbeispiel gemäß Figur 1 dargestellter Windpark umfasst mehrere Windenergieanlagen 1, die je über eine Anschlussleitung 19 mit einem Anlagentransformator 8 an ein parkinternes Sammelnetz 90 angeschlossen sind. Über eine Hauptleitung 91 ist das Sammelnetz 90 über einen Parktransformator 92 mit einem Hochspannungsenergieübertragungsnetz 99 verbunden. Der Windpark ist in seiner Gesamtheit gesteuert von einem Parkmaster 9.

Die Windenergieanlage 1 gemäß dem Ausführungsbeispiel der Erfindung umfasst einen Turm 10, auf dessen oberem Ende in Azimutrichtung schwenkbeweglich eine Gondel 11 angeordnet ist. An deren einer Stirnseite ist drehbeweglich ein Windrotor 12 gelagert, der über eine Rotorwelle (nicht dargestellt) einen Generator 2 zur Erzeugung elektrischer Energie antreibt. Dieser ist mit einem Umrichter 3 verbunden zur Abgabe der erzeugten elektrischen Energie über eine Niederspannungsanschlussleitung 18, die an den Anlagentransformator 8 angeschlossen ist und eine Netzdrossel 4 umfasst. Die Netzdrossel 4 ist vorzugsweise als ein LCL-Filter ausgeführt.

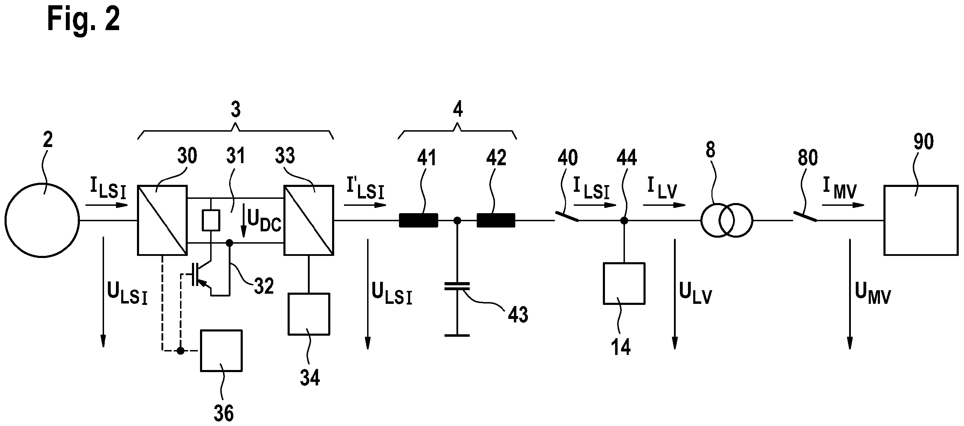

In dem Blockschaltbild gemäß Figur 2 sind die elektrischen Funktionsblöcke der Windenergieanlage 1 visualisiert. Vom Generator 2 wird elektrische Energie erzeugt und über einen netzseitigen Wechselrichter 30 des Umrichters 3 in einen Gleichspannungszwischenkreis 31 eingespeist. Der Gleichspannungszwischenkreis 31 weist einen Kondensator (nicht dargestellt) als Energiespeicher auf. Ferner ist an dem Gleichspannungszwischenkreis 31 ein Chopper 32 in an sich bekannter Weise angeordnet, der wahlfrei angesteuert werden kann und zur Verringerung der im Gleichspannungszwischenkreis 31 zugeführten elektrischen Energie dient. Die Spannung im Gleichspannungszwischenkreis 31 wird als U_{DC} bezeichnet. Zur Abfuhr der in dem Gleichspannungszwischenkreis 31 gespeicherten Energie ist ein netzseitiger Wechselrichter 33 vorgesehen, an den die Drossel 4 angeschlossen ist. Die Spannung am Ausgang des netzseitigen Wechselrichters 33 des Umrichters 3 wird als U_{LSI} und der aus dem netzseitigen Wechselrichter 33 in die Netzdrossel 4 fließende Strom als I'_{LSI} bezeichnet.

Die Netzdrossel 4 ist als ein LCL-Netzfilter ausgeführt und umfasst zwei Induktivitäten, eine umrichterseitige Induktivität 41 und eine netzseitige Induktivität 42. Zwischen ihnen ist ein Siebkondensator 43 angeschlossen. Am Ausgang der Netzdrossel 4 ist ein Niederspannungstrennschalter 40 angeordnet. Der über ihn in geschlossenem Zustand fließende Strom wird als I_{LSI} bezeichnet. Netzseitig hiervor ist ein Anschlusspunkt 44 vorgesehen, der zur Versorgung der elektrischen Komponenten der Windenergieanlage 1 einschließlich ihrer Steuerung 14 dient (der sog. Eigenbedarf). Netzseitig von diesem Anschlusspunkt 44 ist der Maschinentransformator 8 der Windenergieanlage 1 angeschlossen. Der zwischen dem Anschlusspunkt 44 für den Eigenbedarf und dem Maschinentransformator 8 durch eine Niederspannungsanschlussleitung 18 fließende Strom wird als I_{LV} bezeichnet, und die dort herrschende Spannung als U_{LV}. Es handelt sich hierbei um die Spannung an der Niederspannungsseite des Maschinentransformators 8. An dessen Mittelspannungsseite ist ein Mittelspannungsschalter 80 angeordnet, von dem die Anschlussleitung 19 an das parkinterne Sammelnetz 90 führt. Der durch die Anschlussleitung 19 fließende Strom wird als I_{MV} und die dort herrschende Spannung als Ü_{MV} bezeichnet.

Die Steuerung 14 der Windenergieanlage umfasst ein Überspannungsschutzgerät 5, welches dazu dient, die Windenergieanlage 1 bei Spannungsstörungen im Netz, insbesondere beim Auftreten von Überspannungen, vor schädlich hohen Spannungen und deren negativen Auswirkungen zu schützen.

Das Überspannungsschutzgerät 5 gemäß dem Ausführungsbeispiel der Erfindung umfasst mehrere Wirkmodule 61, 62, 63, 64, 65, 66 welche auf jeweils unterschiedliche Weise zu einer Reduktion eines Spannungsanstiegs beitragen. Die Wirkmodule 61-66 sind dazu ausgebildet, dass bei einem netzseitigen Anstieg der Mittelspannung U_{MV}, und entsprechend auch der in der Niederspannungsanschlussleitung 18 anliegenden Spannung U_{LV}, sich ein geringer Spannungsanstieg im Bereich des Umrichters 3 der Windenergieanlage einstellt, so dass dieser vor zu hohen Spannungen geschützt ist. Maßgeblich ist hier für die Spannung am Ausgang des Wechselrichters 33, mithin also U_{LSI}.

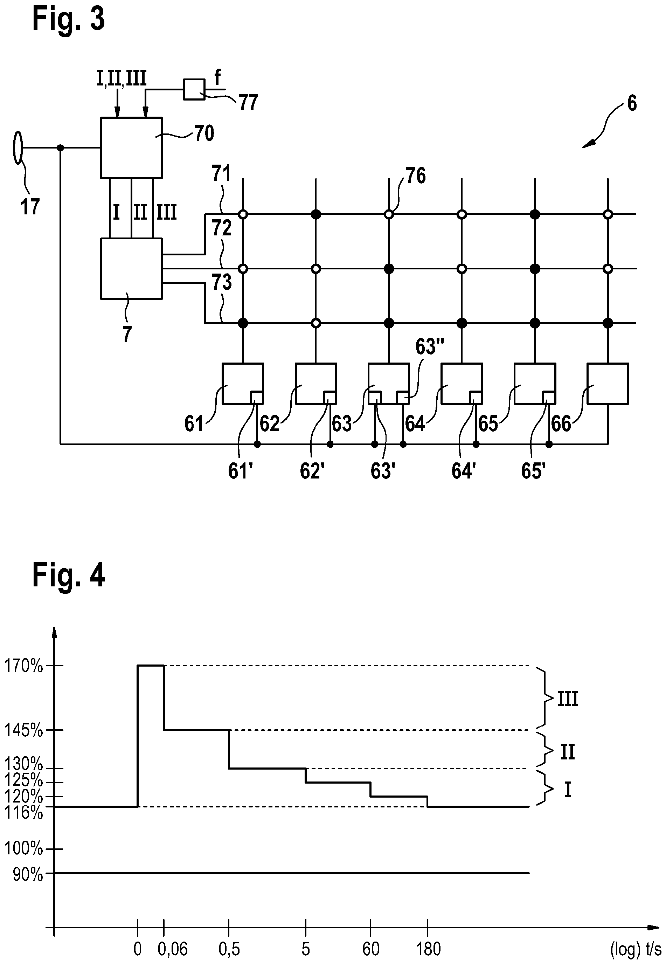

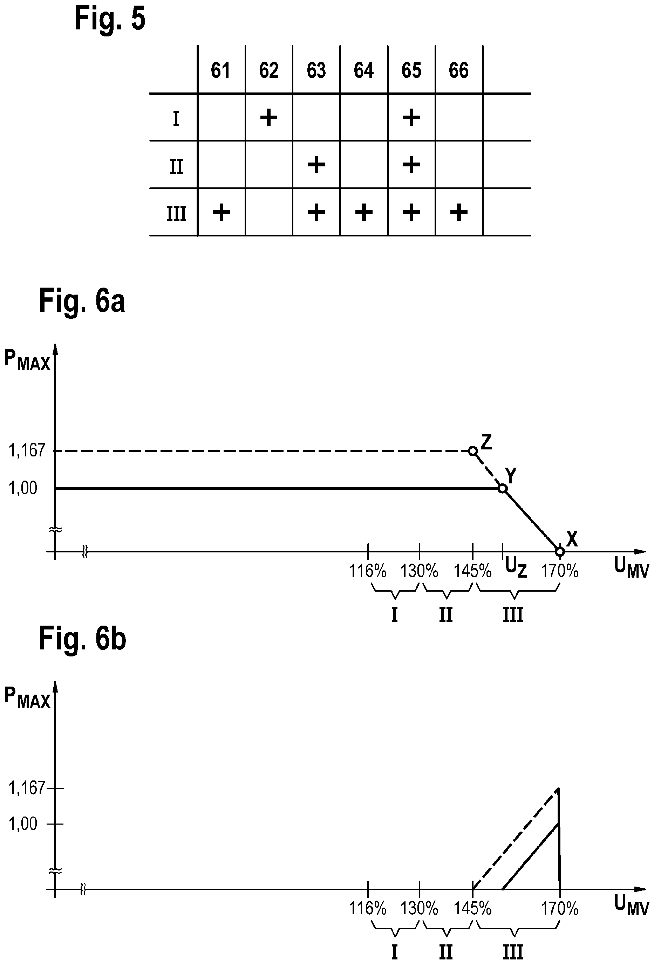

Das Überspannungsschutzgerät 5 umfasst eine Schaltmatrix 6, mit welcher die Wirkmodule 61-66 verknüpft sind. Die Schaltmatrix 6 schaltet je nach Schaltzustand die unterschiedlichen Wirkmodule zu oder ab. Hierzu ist außer der Schaltmatrix 6 ein Selektor 7 mit einem Überspannungsklassifikator 70 vorgesehen. Der Überspannungsklassifikator 70 ist angeschlossen an einen Spannungssensor 17, welcher die Spannung in der Anschlussleitung 19 der Windenergieanlage 1 misst (eine Messung an der Niederspannungsanschlussleitung 18 ist auch möglich). An dem Überspannungsklassifikator sind Werte für Überspannungsbereiche I, II, III eingestellt. Der Überspannungsklassifikator ist dazu ausgebildet, je nach der von dem Sensor 17 gemessenen Spannung zu bestimmen, ob eine Überspannung vorliegt, also eine Spannung oberhalb der Nennspannung des Netzes plus ein vorbestimmter Toleranzbereich. Die nachfolgenden Werte beziehen sich auf die Mittelspannung (bei einem alternativ möglichen Bezug auf die Niederspannung wären die prozentualen Grenzwerte geringfügig abweichend). Vorliegend soll es sich bei dem vorbestimmten Toleranzbereich um einen Wert von bis +16% der Netzspannung handeln. Mithin beginnt also ab einem Wert von 116% der Nennspannung die Überspannung. Der Überspannungsklassifikator 70 bestimmt nun je nachdem, ob die Netzspannung zwischen 116 und 130% der Nennspannung, zwischen 130 und 145% der Nennspannung, oder zwischen 145 und 170% der Nennspannung liegt, welche Stufe des Selektors 7 er ansteuert. Der Selektor 7 steuert nun je nachdem, welche seiner Stufen von dem Überspannungsklassifikator 70 angesteuert wurden, Schaltgruppen 71, 72, 73 an, welche entsprechende Zu- oder Abschaltsignale über die Schaltmatrix 6 an die Wirkmodule 61-66 ausgeben. Somit kann über den Selektor 7 und die Schaltmatrix 6 festgelegt werden, welche der Wirkmodule in welchem Überspannungsbereich aktiviert bzw. deaktiviert sind. Dies kann über die Schaltmatrix 6 frei eingestellt werden. Hierbei sei es so, dass in einem ersten Überspannungsbereich (zwischen 116% und 130% der Nennspannung) die Schaltgruppe 71 angesteuert ist. Dieser Fall wird nachfolgend als Überspannungsbereich I bezeichnet. Für den Fall einer Überspannung im Bereich zwischen 130 und 145% ist die Schaltgruppe 72 betätigt, dieser Fall wird als Überspannungsbereich II bezeichnet. Liegt die Spannung im Bereich zwischen 145% und 170%, ist die Schaltgruppe 73 betätigt und dieser Fall wird als Überspannungsbereich III bezeichnet. Die Überspannungsbereiche sind in Figur 4 dargestellt und die sich in den jeweiligen Überspannungsbereichen unter Berücksichtigung der eingestellten Schaltgruppen 71-73 ergebenden Schaltzustände für die Wirkmodule 61-66 sind in Figur 5 dargestellt.

Nachfolgend werden die Wirkmodule hinsichtlich ihres Aufbaus und ihrer Funktionsweise sowie ihrer Auswirkung auf die elektrischen Parameter, insbesondere die Spannung und Ströme, näher beschrieben.

Das Wirkmodul 61 ist als ein Reduktionsglied ausgeführt und dazu ausgebildet, bei kritischer Überspannung (also im Überspannungsbereich III) die von dem Umrichter 3 abgegebene Wirkleistung zu reduzieren. Dazu ist in dem Wirkmodul 61 eine Spannungsstatik 61' implementiert, welche als eine negative Proportionalsteuerung ausgebildet ist. Das bedeutet, dass oberhalb eines einstellbaren Schwellwerts die von dem Umrichter 3 abgegebene Wirkleistung mit steigender Spannung reduziert wird. Hierbei kommt es auf die Spannung der Mittelspannungsebene U_{MV} an. Die Proportionalsteuerung in der Spannungsstatik 61' ist so eingestellt, dass beim Erreichen des oberen Endes des Überspannungsbereichs III bei einem Wert von 170% der Nennspannung die Wirkleistungseinspeisung auf null reduziert ist (s. Punkt X in Fig. 6a). Die Verringerung setzt an bei einem Spannungswert U_{Z}, der größer ist als das untere Ende des Überspannungsbereichs III (s. Punkt Y in Fig. 6a). Hierbei sind die Spannung U_{Z} und der Punkt Y so gewählt, dass bei einer Verlängerung der in der Spannungsstatik 61' implementierten Kennlinie nach unten, also zur niedrigeren Spannung hin, beim Erreichen des unteren Endes im Überspannungsbereich III (die Spannung beträgt dann 145% der Nennspannung) ein Wirkleistungswert erreicht ist, welcher der dynamischen Wirkleistungsabgabe entspricht, die der Umrichter 3 für kurze Zeit leisten kann (s. Punkt Z). Durch diese Anschaltung wird erreicht, dass die für den Betrieb der Windenergieanlage 1 an sich nicht gewünschte Verringerung der Wirkleistungseinspeisung erst dann erfolgt, wenn die Spannung sich bereits in kritischer Höhe befindet. Durch das verzögerte Einsetzen erst bei der Spannung U_{Z} (Punkt Y) wird eine weitere Einschaltverzögerung erreicht. Dennoch wird durch die Verlängerung der Kennlinie (zu Punkt Z) ein sicheres Abfangen auch in solchen Situationen gewährleistet, in denen der Umrichter aufgrund der Betriebssituation dynamische (Über-)Wirkleistung abgibt. Um in diesem Fall eine ausreichende Abfuhr überschüssiger Leistung aus dem Zwischenkreis 31 zu gewährleisten, weist das Wirkmodul 61 vorzugsweise weiter einen Steuerausgang 61" zur Aktivierung eines anderen Wirkmoduls 66 auf, das den Chopper 32 des Umrichters 3 aktiviert. Damit kann insbesondere im Fall von hoher Wirkleistung, insbesondere im dynamischen Bereich (s. Bereich zwischen Punkten Z und Y in Fig. 6a) die überschüssige Leistung wirkungsvoll reduziert werden. Der Umfang der Reduzierung ist in Fig. 6b dargestellt. Durch diese Kombination des Wirkmoduls 61 mit dem Steuerausgang 61" für den Chopper 32 wird somit auch eine dynamische Überlastfestigkeit erreicht.

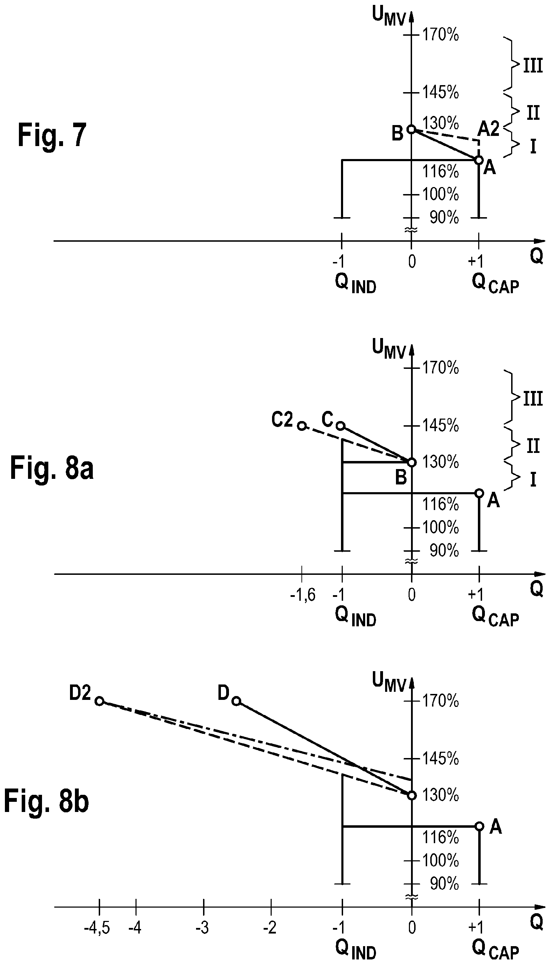

Das Wirkmodul 62 ist als Limiter ausgeführt und dazu ausgebildet, derart auf den netzseitigen Wechselrichter 33 des Umrichters 3 zu wirken, dass dessen übererregte Blindleistung im Überspannungsbereich I mit zunehmender Netzspannung auf null reduziert wird. Bezugspunkt ist wiederum die Mittelspannung Ü_{MV}. Dazu ist in dem Wirkmodul 62 eine entsprechende Blindleistungsstatik 62' implementiert. Veranschaulicht ist dies in Figur 7 durch den Punkt B, der am oberen Ende des Überspannungsbereichs I mit einer Reduktion der übererregten Blindleistung auf null einhergeht. Die Blindleistungsstatik 62' ist dazu so auf die Netzdrossel 4 abgestimmt, dass der Spannungsabfall über die Netzdrossel 4 so groß ist, dass am unteren Ende des Überspannungsbereichs 1 (entsprechend in der Spannung von 116%) noch die volle, nicht-reduzierte Blindleistung (s. den Wert Q_{cap}, = 1 in Fig. 7) eingespeist werden kann (s. Punkt A in Fig. 7). Es kann aber auch vorgesehen sein, dass eine kleinere Netzdrossel 4 eingesetzt ist, die so bemessen ist, dass die volle Einspeisung der übererregten Blindleistung Q_{crp} noch über einen Spannungswert von 116% hinaus möglich ist (bis zum Punkt A2 in Fig. 7), und erst dann eine Reduktion erfolgt (s. gestrichelte Linie in Fig. 7). Letzteres bietet den Vorteil, dass dank der kleineren Dimensionierung der Drossel 4 die Einspeisung der übererregten Blindleistung noch länger aufrechterhalten bleiben kann.

Das Wirkmodul 62 ist in Überspannungsbereichen II und III vorzugsweise nicht mehr aktiv, da die Einspeisung übererregter Blindleistung dann ohnehin bereits den Wert Null erreicht hat (s. Punkt B in Fig. 7).

Ferner ist ein Wirkmodul 63 als eine induktive Überstromsteuerung vorgesehen, welches ebenfalls auf die Blindleistung einwirkt. Es ist zum Zusammenwirken mit dem Limiter des Wirkmoduls 62 in der Weise ausgebildet, dass das Wirkmodul 63 erst dann zum Einsatz kommt, wenn das Wirkmodul 62 die Abgabe übererregter Blindleistung auf den Wert Null reduziert hat. Das Wirkmodul 63 weist zwei Blindleistungsstatiken 63', 63" auf, eine für den Überspannungsbereich II und eine weitere für den Überspannungsbereich III. Es wird Bezug genommen auf die Figuren 8a und 8b. Durch das Zusammenwirken mit dem Wirkmodul 62 übernimmt das Wirkmodul 63 am Punkt B (vgl. Fig. 7 und 8a). Mit zunehmender Spannung U_{MV} ist die Blindleistungsstatik 63' für den Überspannungsbereich II so ausgebildet, dass sie eine abzugebende induktive (untererregte) Blindleistung zusehends steigert. Für den Fall einer großen Netzdrossel 4 ist die Blindleistungsstatik 63' so ausgeführt, dass beim Erreichen von dem oberen Ende des Überspannungsbereichs II (bei einem Spannungswert von 145%) die abgegebene untererregte Blindleistung Q_{IND} genau den Nennwert für die untererregte Blindleistung erreicht (s. Punkt C in Fig. 8a). Alternativ kann auch vorgesehen sein, dass eine Netzdrossel 4 mit kleiner Induktivität vorgesehen ist. Dann ergibt sich ein Kennlinienverlauf für die Spannungsstatik, wie er durch die Punkte B und C in Figur 8a charakterisiert ist. Demnach wird beim Erreichen des oberen Endes des Überspannungsbereichs II eine induktive Blindleistung vom 1,6-fachen des Nennwerts eingestellt. Es versteht sich, dass hierzu der Umrichter 3, genauer gesagt dessen netzseitiger Wechselrichter 33, auf eine entsprechende Strombelastung ausgelegt sein muss.

Im Überspannungsbereich III schaltet das Wirkmodul 63 auf die Spannungsstatik 63" um. Es wird Bezug genommen auf Figur 8b. Für den Fall einer großen Netzdrossel 4 ist die Blindleistungsstatik 63" so ausgelegt, dass beim Erreichen des oberen Endes des Überspannungsbereichs III (bei U_{MV} = 170% des Nennwerts) eine untererregte Blindleistung von etwa dem 2,5-fachen des Nennwerts erreicht ist (s. Abszissenwert -2,5 für Q_{IND}), visualisiert durch den Punkt D in Figur 8b. Ferner dargestellt ist, wie für den alternativen Fall einer kleinen Netzdrossel 4 die Blindleistungsstatik 63" ausgelegt ist, nämlich so, dass sie am Punkt D2 endet. Man erkennt, dass damit eine deutliche Steigerung der Blindleistungsabgabe des netzseitigen Wechselrichters 33 erforderlich ist, denn dieser muss eine Blindleistung von etwa dem 4,5-fachen des untererregten Blindleistungsnennwerts bereitstellen können. Es ist somit deutlich, dass der für den Fall der niedrigen Überspannungsbereiche I günstige Fall der Wahl einer kleinen Drossel 4 im Überspannungsbereich III einhergeht mit einer sehr hohen Blindleistungsbelastung des Wechselrichters 33.

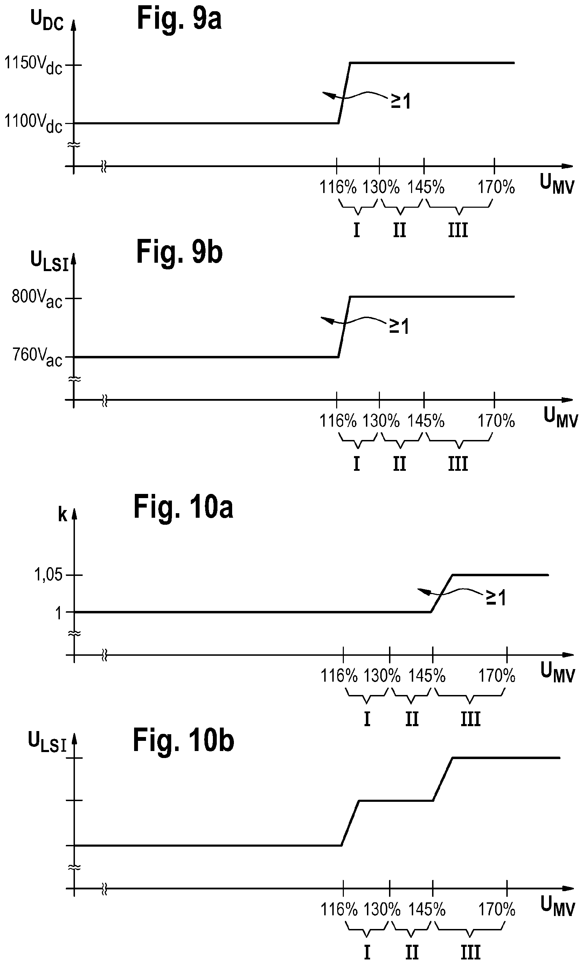

Um dem Wechselrichter 33 die Bereitstellung der teilweise sehr hohen Leistungsanforderungen, wie vorstehend beschrieben, zu ermöglichen, ist das Wirkmodul 64 vorgesehen. Es wirkt auf die Spannung im Zwischenkreis 31 des Umrichters 3 ein. Das Wirkmodul 64 weist einen Sollspannungsschieber auf, der auf ein Steuerungsglied 36 für die Spannung im Zwischenkreis einwirkt. Es ist dazu ausgebildet, beim Erreichen des Überspannungsbereichs I den Sollwert für die Spannung im Zwischenkreis zu einem höheren Wert zu verschieben, im dargestellten Ausführungsbeispiel von einem normalen Wert für die Spannung im Zwischenkreis von 1100 V auf einen erhöhten Spannungswert von 1150 V (s. Fig. 9, oberes Diagramm). Dazu umfasst der Sollspannungsschieber ein Rampenglied 64', welches so ausgebildet ist, dass eine überproportionale Steigerung des Sollwerts erfolgt. Darunter wird verstanden, dass bei einer Steigerung der hierfür maßgeblichen Spannung am Punkt 19 um 1% die Spannung im Zwischenkreis um mehr als 1% ansteigt.

Durch die Steigerung der Spannung im Zwischenkreis kann die von dem netzseitigen Wechselrichter 33 abgegebene Spannung U_{LSI} entsprechend erhöht werden. Die hierbei erreichte Steigerung bildet diejenige im Zwischenkreis 31 ab. Die somit erreichte Steigerung der Spannung U_{LSI} ist in Figur 9, unteres Diagramm dargestellt. Es hat sich bewährt, wenn die im Überspannungsbereich I vorgenommene Steigerung im Überspannungsbereich II und III beibehalten wird, aber nicht weiter fortgeführt wird.

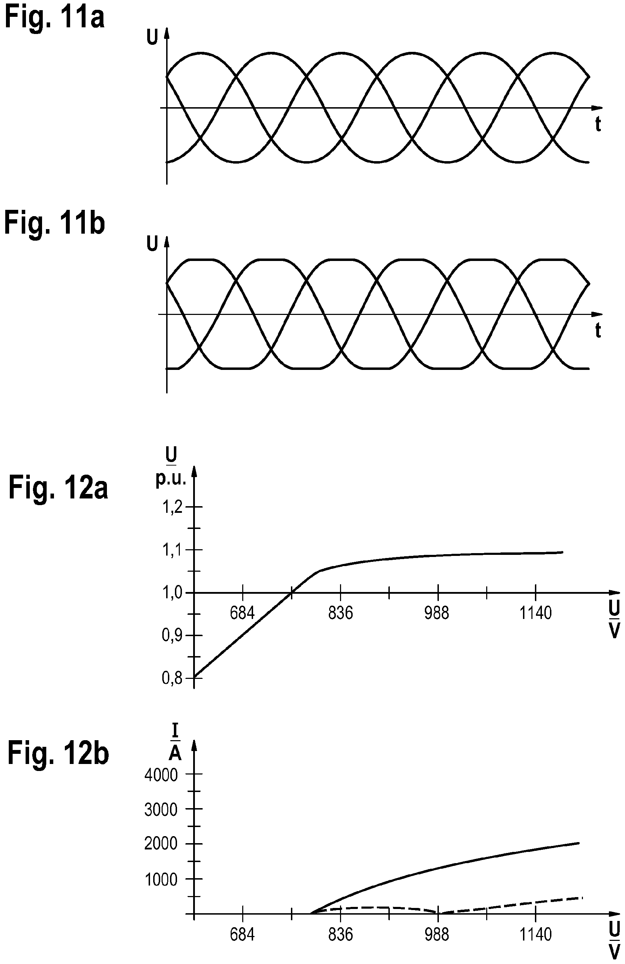

Zur weiteren Unterstützung ist ein Wirkmodul 65 vorgesehen. Es wirkt auf ein pulsweites Modulations-Steuerglied 34 des netzseitigen Wechselrichters 33 ein, und zwar in der Weise, dass die von dem Steuerglied 34 durchgeführte Modulation 33 als Übermodulation erfolgt. Vorgesehen ist eine Übermodulation bis zu ca. 105% der Ausgangsmaximalspannung im Überspannungsbereich III (s. Fig. 10, oberes Diagramm). Die Wirkung der Übermodulation ist in den Figuren 11 und 12 dargestellt. Ausgehend von dem normalmodulierten Fall (also ohne Übermodulation) sind in Figur 11a die verketteten Spannungen in dem dreiphasigen Drehstromsystem des Wechselrichters 33 dargestellt. In Figur 11b ist der Fall mit Übermodulation dargestellt. Man erkennt, dass die Flächen unter den Kurven (jeweils bezogen auf die Grundlinie bei null) im übermodulierten Fall größer sind als im nichtübermodulierten Fall (vgl. Fig. 11b mit Fig. 11a). Dies steht für eine Steigerung des Effektivwerts der jeweiligen Spannung. Allerdings ist die bei Übermodulation erzeugte Spannung nicht mehr sinusförmig, wie Figur 11b anschaulich zeigt. Es entstehen damit Oberschwingungen.

Der erwünschte Anstieg des Effektivwerts der abgegebenen Spannung ist in Figur 12a über dem Grad der Übermodulation abgetragen, während Figur 12b den an sich nicht erwünschten Anstieg der Oberschwingungen bei den jeweils erreichten (überhohen) Spannungen darstellt. Man erkennt deutlich, dass insbesondere die fünfte (durchgezogene Linie) und die siebte (gestrichelte Linie) Oberschwingung ab einem Wert von 836 V, der bei einer Übermodulation von 105% der Ausgangsmaximalspannung erreicht ist, deutlich ansteigen. Damit wird die Übermodulation vorzugsweise limitiert auf einen Wert von 1,05 entsprechend 105%. Es kann somit eine Spannungssteigerung um etwa 5% erreicht werden (s. Fig. 12a). Wegen der bekannten Beziehung, wonach bei konstantem Strom die Leistung linear mit der Spannung ansteigt, kann somit eine Leistungssteigerung von über 5% allein durch diese Übermodulation erreicht werden. Durch das Zusammenwirken mit dem Wirkmodul 64 ergibt sich sogar eine insgesamt 10%-ige Spannungserhöhung in zwei 5%-Stufen (s. Fig. 10, unteres Diagramm). Mithin kann so also eine Mehrleistung von über 10% erreicht werden. Dies stellt eine wertvolle Unterstützung durch das Wirkmodul 65 dar, welches im Überspannungsbereich III erhebliche zusätzliche Belastungen in Form von Blindleistung anfordert.

Ferner wirkt das Wirkmodul 65 mit dem Wirkmodul 61 in der Weise zusammen, indem dieses die abzugebende Wirkleistung im Überspannungsbereich zurückführt. Auf diese Weise kann der vom Wechselrichter 33 verfügbare Strom zusehends mehr, bis hin zu ausschließlich, für die Erzeugung der von dem Wirkmodul 65 benötigten Blindleistung verwendet werden. Damit ergibt sich ein synergistisches Zusammenwirken der Wirkmodule 61, 63 und 64 in den Überspannungsbereichen.

Das Wirkmodul 65 enthält eine Modulationsstatik 65'. Sie ist so ausgebildet, dass sie in Abhängigkeit von einer Überspannung an der Mittelspannung U_{MW} einen Übermodulationsgrad bestimmt. Hierbei ist die Statik als ein Proportionalsteuerglied ausgebildet. In diesem ist eine Kennlinie implementiert, die eine Steigung größer als 1 aufweist, so dass das Steuerglied überproportional ausgelegt ist. Damit kann ein schnelles Ansprechverhalten bereits zu Beginn der kritischen Überspannung erreicht werden.

Weiter ist ein Wirkmodul 66 vorgesehen, welches als ein Zusatzaktivierungsmodul für den Chopper 32 ausgeführt ist. Hierbei wird der Chopper 32 im Überspannungsbereich III aktiviert. Damit wird die Wirkleistung gegenüber dem Netz reduziert, während der Generator 2 in der Windenergieanlage durchlaufen kann und die von ihm erzeugte Leistung in den Chopper einspeist. Damit kann eine Entlastung des Generators 2 vermieden werden. Vorzugsweise wirkt das Modul 66 mit dem Wirkmodul 61 zusammen, und zwar in der Weise, dass insbesondere beim Auftreten zusätzlicher dynamischer Wirkleistung im Überspannungsbereich der Chopper 32 durch das Wirkmodul 66 hinzugeschaltet wird. Dies ist in Figur 6 mit den gestrichelten Linien im Überspannungsbereich III visualisiert.

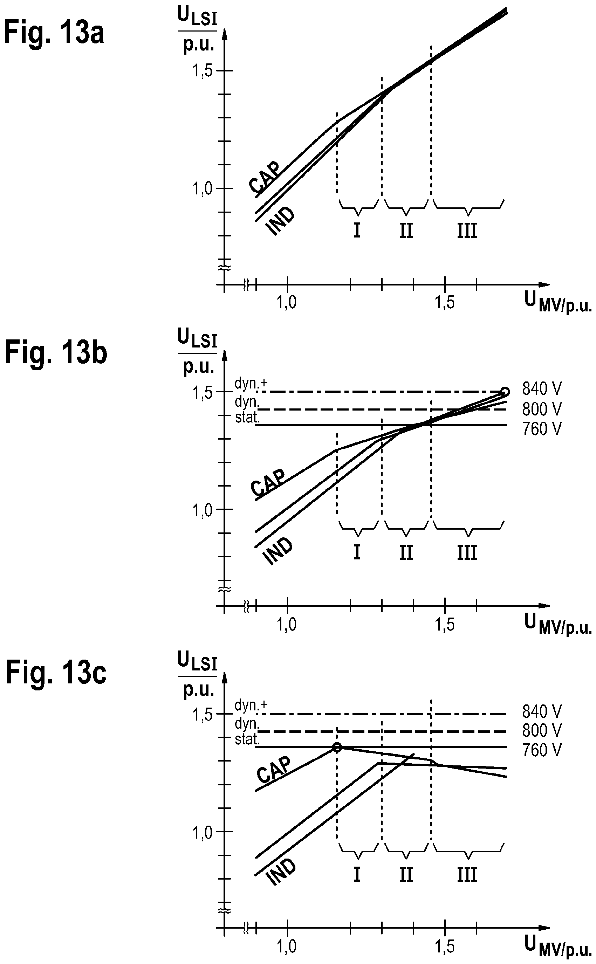

In den Diagrammen in Figur 13a-c ist das Zusammenwirken der Wirkmodule 61 bis 66 dargestellt. Die durchgezogenen Linien stehen für die sich ergebenden Spannungsverläufe bei einer Überspannung im Netz jeweils für den Fall eines Leerlaufbetriebs (mittlere durchgezogene Kennlinie), eines Falls mit 110% Wirkleistung und 50% übererregter Blindleistung (die obere durchgezogene Linie, beschriftet mit "CAP") und den Fall einer Wirkleistung von 110% und 50% untererregter Blindleistung, jeweils bezogen auf die Nennwerte (untere durchgezogene Linie, beschriftet mit "IND"). Hierbei zeigt das Diagramm in Figur 10a den Ausgangsfall ohne Aktivität der Wirkmodule. Man erkennt in den Figuren 10b und c, dass durch das Einwirken der Wirkmodule der Spannungsanstieg für die Spannung U_{LSI} am Ausgang des Umrichters 3 deutlich abgeschwächt ist verglichen mit der Ausgangssituation wie in Figur 10a dargestellt. In Figur 10b ist der Kennlinienverlauf für den Fall dargestellt, dass eine kleine Netzdrossel 4 vorgesehen ist. Unter einer kleinen Netzdrossel wird eine mit geringer Induktivität verstanden. Der Spannungsanstieg setzt sich hier bis in die höheren Bereiche fort, allerdings mit einem erheblich schwächeren Umfang. Die jeweils erreichten Grenzwerte für die Spannung U_{LSI} am Umrichter 3 für die verschiedenen Fälle sind an der rechten Seite abgetragen mit 840 V als Maximum. Die auslegungsrelevante Stelle ist also der obere Endpunkt des Überspannungsbereichs III (markiert durch einen Kreis). Der Fall mit einer Auslegung für eine große Netzdrossel 4 ist in Figur 10c dargestellt. Man erkennt, dass hier bei höheren Überspannungen U_{MW} im Netz die Spannung U_{LSI} am Umrichter 3 sogar zurückgeht. Der auslegungsrelevante Punkt (markiert durch einen Kreis) ist nunmehr eine Knickstelle zu Beginn des Überspannungsbereichs I.

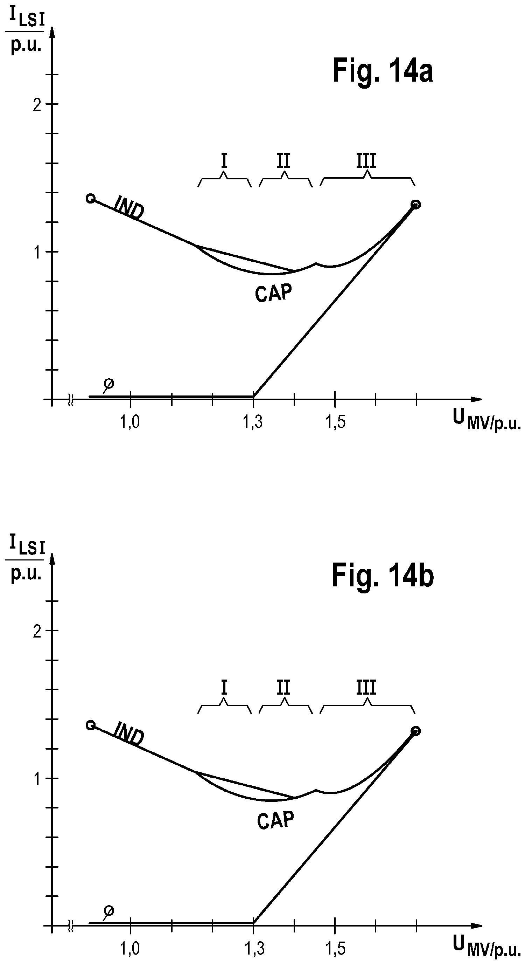

Die sich ergebenden Ströme auf der Niederspannungsseite des Netztransformators 8 (Strom I_{LV}) über der Mittelspannung U_{MV} sind in Figur 14a dargestellt, und in Figur 14b sind entsprechend die Ströme am Ausgang des Wechselrichters 33 (I_{LSI}) dargestellt. Man erkennt in Figur 14a, dass auch im ungünstigsten Fall, nämlich bei dem Erreichen des oberen Endes des Überspannungsbereichs III der Strom nicht höher ist als am unteren Ende des Spannungsspektrums (bei U_{MV}=0,9). Damit sind die Auslegungsgrenzen für den Transformator 8 eingehalten. Ferner erkennt man in Figur 14b, dass die vom Wechselrichter 33 zu leistenden Ströme ebenfalls im ungünstigsten Fall am oberen Ende des Überspannungsbereichs III nicht höher sind als zu Beginn des zulässigen Spannungsspektrums (wiederum am Punkt 0,9). Damit liegt auch die Belastung des Wechselrichters 33 im zulässigen Bereich, selbst für den Fall kritisch hoher Überspannungen im Überspannungsbereich III. Die Diagramme in Figur 14a, b sind gültig für kleine oder große Netzdrosseln 4.

Der Netztransformator 8 ist vorzugsweise so ausgelegt, dass oberhalb einer vordefinierten Spannungs-Frequenzkombination eine magnetische Sättigung eintritt. Dadurch werden mehrere Vorteile erzielt. Zum einen kann der Transformator 8 kleiner ausgelegt werden. Bei einem vorgesehenen Betriebs-Frequenzbereich 45 Hz bis 55 Hz ist der Transformator zweckmäßigerweise so ausgelegt, dass am unteren Ende des Betriebsbereichs (hier 45 Hz) eine Sättigung eintritt ab einer Überspannung von 116 %. Durch diese Sättigung erzeugt der Transformator zusätzlichen Blindstrom, der weiter für den Schutz der Anlage günstig ist. Vorzugsweise ist der Einsetzpunkt so gewählt, dass die Wirkung primär in den Überspannungsbereichen II und III auftritt.

Da dieser Effekt frequenzabhängig ist, sind vorzugsweise die Grenzen für die Überspannungsbereiche in Abhängigkeit von der Netzfrequenz f mitzuführen. Dazu ist zweckmäßigerweise ein Frequenz-Adaptionsglied 77 für den Überspannungsklassifikator 70 vorgesehen.

## Patentansprüche

1. Windenergieanlage mit einem Windrotor (12), einem Generator (2), der von dem Windrotor (12) angetrieben ist, und einem Umrichter (3), wobei der Generator (2) und der Umrichter (3) zur Erzeugung elektrischer Energie ausgebildet sind, die über eine Anschlussleitung (19) mit einer induktiv wirkenden Netzdrossel (4) an ein Netz (90) abgegeben wird, wobei ein Überspannungsschutzgerät (5) vorgesehen ist,
**dadurch gekennzeichnet, dass**
das Überspannungsschutzgerät umfasst
- mehrere unterschiedliche Wirkmodule (61-66), die so ausgebildet sind, dass sie auf voneinander verschiedene Weise jeweils eine Senkung der Spannung am Ausgang des Umrichters (3) bewirken, wobei sich die Wirkmodule (61-66) hinsichtlich ihrer Funktionsweise unterscheiden,
- eine Schaltmatrix (6), welche die unterschiedlichen Wirkmodule zu- und abschaltet,
- ein Überspannungsklassifikator (70) zur Erfassung der Spannung an der Anschlussleitung (19), wobei der Überspannungsklassifikator (70) ausgebildet ist, die erfasste Spannung einem von mehreren Überspannungsbereiche (I, II, III) zuzuordnen, und
- einen Selektor (7), der dazu ausgebildet ist, je nach Überspannungsbereich Schaltgruppen (71, 72, 73) anzusteuern, welche Schaltgruppen (71, 72, 73) ausgebildet sind, entsprechende Zu- und Abschaltsignale über die Schaltmatrix an die Wirkmodule (61-66) auszugeben um festzulegen, welche Wirkmodule (61-66) in welchem Überspannungsbereich aktiviert bzw. deaktiviert sind.

2. Windenergieanlage nach Anspruch 1, **dadurch gekennzeichnet, dass** die Schaltmatrix (6) und der Selektor (7) so ausgebildet sind, dass mindestens zwei, vorzugsweise mindestens drei, verschiedene Überspannungsstufen (I, II, III) schaltbar sind.

3. Windenergieanlage nach Anspruch 1 oder 2, **dadurch gekennzeichnet, dass** der Selektor und die Schaltmatrix kombiniert ausgeführt sind.

4. Windenergieanlage nach einem der vorangehenden Ansprüche, **dadurch gekennzeichnet, dass** eines der Wirkmodule (61) ausgebildet ist als ein Reduktionsglied zur Reduktion der abgegebenen Wirkleistung, und zwar erst ab mindestens einer zweiten Stufe der Überspannung (II).

5. Windenergieanlage nach Anspruch 4, **dadurch gekennzeichnet, dass** das Reduktionsglied eine Stromstatik (61') implementiert hat, wobei der abgegebene Wirkstrom der Windenergieanlage bei steigender Spannung zunehmend reduziert ist.

6. Windenergieanlage nach einem der vorangehenden Ansprüche, **dadurch gekennzeichnet, dass** eines der Wirkmodule (62) ausgebildet ist als ein veränderbarer Limiter für eine kapazitive Blindleistungsabgabe.

7. Windenergieanlage nach Anspruch 6, **dadurch gekennzeichnet, dass** der Limiter eine Begrenzungsstatik (62') umfasst.

8. Windenergieanlage nach einem der vorangehenden Ansprüche, **dadurch gekennzeichnet, dass** eines der Wirkmodule (63) ausgebildet ist als eine Überstromsteuerung, welche eine erhöhte induktive Blindleistungsabgabe über der Nenn-Blindleistungsabgabe einstellt, die vorzugsweise größer ist als eine Nennblindleistung.

9. Windenergieanlage nach Anspruch 8, **dadurch gekennzeichnet, dass** die Netzdrossel (4) und/oder ein Transformator (8) so dimensioniert sind, dass auch im oberen Ende des höchsten Überspannungsbereichs (3) der Blindstrom maximal das 1,6-fache, vorzugsweise maximal das 1,1-fache des Nennblindstroms beträgt.

10. Windenergieanlage nach Anspruch 8 oder 9, **dadurch gekennzeichnet, dass** die Überstromsteuerung (63) mehrstufig ausgeführt ist, wobei in einer zweiten Stufe (63") eine erhöhte induktive Blindleistungsabgabe vorgesehen ist, die vorzugsweise das Doppelte der Nenn-Blindleistungsabgabe beträgt.

11. Windenergieanlage nach einem der vorangehenden Ansprüche, **dadurch gekennzeichnet, dass** eines der Wirkmodule (64) ausgebildet ist als ein Sollspannungsschieber für die Spannung im Zwischenkreis (31), der vorzugsweise eine Spannungsstatik umfasst.

12. Windenergieanlage nach Anspruch 11, **dadurch gekennzeichnet, dass** die Spannungsstatik in mehrere Bereiche unterteilt ist, wobei vorzugsweise mindestens zwei Bereiche eine Rampenfunktion bilden mit einem Bereich, der einen erhöhten Konstantwert aufweist.

13. Windenergieanlage nach Anspruch 11 oder 12, **dadurch gekennzeichnet, dass** ein Rampenglied (64') vorgesehen ist, in dem eine überproportionale Rampensteigung implementiert ist.

14. Windenergieanlage nach einem der vorangehenden Ansprüche, **dadurch gekennzeichnet, dass** eines der Wirkmodule (65) ausgebildet ist als ein Übermodulationsglied, welches die von dem Umrichter (3) abgegebene Spannung erhöht.

15. Windenergieanlage nach Anspruch 14, **dadurch gekennzeichnet, dass** durch Übermodulation eine Erhöhung zumindest auf das 1,05-fache des Maximalwerts ohne Übermodulation erreicht ist, vorzugsweise bis mindestens auf das 1,07-fache.

16. Windenergieanlage nach Anspruch 14 oder 15, **dadurch gekennzeichnet, dass** das Übermodulationsglied auf einem Klirrfaktor von höchstens 20% eingestellt ist.

17. Windenergieanlage nach einem der Ansprüche 14 bis 16, **dadurch gekennzeichnet, dass** eine Steuerstatik für das Übermodulationsglied vorgesehen ist, in welchem eine überproportionale Rampenfunktion implementiert ist.

18. Windenergieanlage nach einem der vorangehenden Ansprüche, **dadurch gekennzeichnet, dass** eines der Wirkmodule (66) als ein Zusatzaktivator für einen Chopper (32) des Umrichters (3) ausgebildet ist und einen Steuerausgang zur Aktivierung des Choppers aufweist.

19. Windenergieanlage nach einem der vorangehenden Ansprüche, **dadurch gekennzeichnet, dass** ein Frequenzadaptionsmodul (77) vorgesehen ist, das mit dem Überspannungsklassifikator (70) in der Weise zusammenwirkt, dass bei einer Netzfrequenz unterhalb einer Nenn-Netzfrequenz die Klassifikation mit verringerten Werten erfolgt und vorzugsweise eine Maximalspannung verringert ist.

20. Windenergieanlage nach einem der vorangehenden Ansprüche, **dadurch gekennzeichnet, dass** ein Anlagentransformator (8) in der Anschlussleitung (19) so bemessen ist, dass er bei Netzfrequenzen unterhalb einer Nenn-Netzfrequenz magnetisch gesättigt ist im Überspannungsbereich.

## Claims

1. Wind turbine comprising a wind rotor (12), a generator (2) which is driven by the wind rotor (12), and a converter (3), wherein the generator (2) and the converter (3) are designed to generate electrical energy, which is output via a connecting line (19) with an inductively acting line reactor (4) to a grid (90), wherein an overvoltage protection device (5) is provided,
**characterized in that**
the overvoltage protection device comprises
- a plurality of different active modules (61-66), which are designed in such a way that they each effect, in different ways, a reduction in the voltage at the output of the converter (3), wherein the active modules (61-66) differ in terms of their operation,
- a switching matrix (6), which connects and disconnects the different active modules,
- an overvoltage classifier (70) for recording the voltage on the connecting line (19), wherein the overvoltage classifier (70) is designed to assign the recorded voltage to one of a plurality of overvoltage ranges (I, II, III), and
- a selector (7) that is designed to drive switching groups (71, 72, 73) depending on the overvoltage range, which switching groups (71, 72, 73) are designed to output corresponding connection and disconnection signals to the active modules (61-66) via the switching matrix in order to define which active modules (61-66) are activated or deactivated in which overvoltage range.

2. Wind turbine according to Claim 1, **characterized in that** the switching matrix (6) and the selector (7) are designed in such a way that at least two, preferably at least three, different overvoltage stages (I, II, III) are switchable.

3. Wind turbine according to Claim 1 or 2, **characterized in that** the selector and the switching matrix are combined.

4. Wind turbine according to one of the preceding claims, **characterized in that** one of the active modules (61) is in the form of a reduction element for reducing the output active power, to be precise only after at least one second stage of the overvoltage (II).

5. Wind turbine according to Claim 4, **characterized in that** the reduction element has implemented a current droop (61'), wherein the output active current of the wind turbine is reduced increasingly as the voltage increases.

6. Wind turbine according to one of the preceding claims, **characterized in that** one of the active modules (62) is in the form of a variable limiter for a capacitive reactive-power output.

7. Wind turbine according to Claim 6, **characterized in that** the limiter comprises a limitation droop (62').

8. Wind turbine according to one of the preceding claims, **characterized in that** one of the active modules (63) is in the form of an overcurrent controller, which sets an increased inductive reactive-power output in comparison with the rated reactive-power output, which is preferably greater than a rated reactive power.

9. Wind turbine according to Claim 8, **characterized in that** the line reactor (4) and/or a transformer (8) are dimensioned in such a way that the reactive current is at most 1.6 times, preferably at most 1.1 times the rated reactive current, even at the upper end of the highest overvoltage range (3).

10. Wind turbine according to Claim 8 or 9, **characterized in that** the overcurrent controller (63) has a plurality of stages, wherein, in a second stage (63"), an increased inductive reactive-power output is provided, which is preferably twice the rated reactive-power output.

11. Wind turbine according to one of the preceding claims, **characterized in that** one of the active modules (64) is in the form of a setpoint voltage slide for the voltage in the DC link (31), which preferably comprises a voltage droop.

12. Wind turbine according to Claim 11, **characterized in that** the voltage droop is divided into a plurality of ranges, wherein preferably at least two ranges form a ramp function with a range that has an increased constant value.

13. Wind turbine according to Claim 11 or 12, **characterized in that** a ramp element (64') is provided, in which an overproportional ramp gradient is implemented.

14. Wind turbine according to one of the preceding claims, **characterized in that** one of the active modules (65) is in the form of an overmodulation element, which increases the voltage output by the converter (3).

15. Wind turbine according to Claim 14, **characterized in that**, by virtue of overmodulation, an increase to at least 1.05 times the maximum value without overmodulation is achieved, preferably up to at least 1.07 times.

16. Wind turbine according to Claim 14 or 15, **characterized in that** the overmodulation element is set to a total harmonic distortion of at most 20%.

17. Wind turbine according to one of Claims 14 to 16, **characterized in that** a control droop for the overmodulation element is provided, in which an overproportional ramp function is implemented.

18. Wind turbine according to one of the preceding claims, **characterized in that** one of the active modules (66) is in the form of an additional activator for a chopper (32) of the converter (3) and has a control output for activating the chopper.

19. Wind turbine according to one of the preceding claims, **characterized in that** a frequency adaptation module (77) is provided, which interacts with the overvoltage classifier (70) in such a way that, in the case of a line frequency below a rated line frequency, the classification is performed with reduced values and preferably a maximum voltage is reduced.

20. Wind turbine according to one of the preceding claims, **characterized in that** a turbine transformer (8) in the connecting line (19) is dimensioned in such a way that it experiences magnetic saturation in the overvoltage range in the case of line frequencies below a rated line frequency.

## Revendications

1. Éolienne comprenant un rotor éolien (12), un générateur (2) entraîné par le rotor éolien (12) et un convertisseur (3), dans laquelle le générateur (2) et le convertisseur (3) sont conçus pour générer de l'énergie électrique qui est délivrée à un réseau (90) par l'intermédiaire d'une ligne de raccordement (19) au moyen d'une self réseau à action inductive (4), dans laquelle il est prévu un appareil de protection contre les surtensions (5), **caractérisée en ce que**
l'appareil de protection contre les surtensions comprend
- une pluralité de modules actifs différents (61-66) conçus pour provoquer respectivement, de différentes manières les uns par rapport aux autres, un abaissement de la tension à la sortie du convertisseur (3), les modules actifs (61-66) se distinguant par leur mode de fonctionnement,
- une matrice de commutation (6), qui active et désactive les différents modules actifs,
- un classificateur de surtension (70) destiné à détecter la tension sur la ligne de raccordement (19), le classificateur de surtension (70) étant conçu pour associer la tension détectée à l'une d'une pluralité de plages de surtension (I, II, III), et
- un sélecteur (7) qui est conçu pour commander des groupes de commutation (71, 72, 73) en fonction de la plage de surtension, lesquels groupes de commutation (71, 72, 73) sont conçus pour délivrer aux modules actifs (61-66) des signaux d'activation et de désactivation correspondants par l'intermédiaire de la matrice de commutation afin de déterminer quels modules actifs (61-66) sont activés ou désactivés dans quelle plage de surtension.

2. Éolienne selon la revendication 1, **caractérisée en ce que** la matrice de commutation (6) et le sélecteur (7) sont conçus de manière à ce qu'au moins deux, de préférence au moins trois, niveaux de surtension différents (I, II, III) puissent être commutés.

3. Éolienne selon la revendication 1 ou 2, **caractérisée en ce que** le sélecteur et la matrice de commutation sont conçus de manière combinée.

4. Éolienne selon l'une des revendications précédentes, **caractérisée en ce que** l'un des modules actifs (61) est réalisé sous la forme d'un élément de réduction destiné à réduire la puissance active délivrée, et ce uniquement à partir d'au moins un deuxième niveau de la surtension (II) .

5. Éolienne selon la revendication 4, **caractérisée en ce que** l'élément de réduction a mis en œuvre un dispositif statique de courant (61'), dans laquelle le courant actif délivré par l'éolienne diminue d'autant plus que la tension augmente.

6. Éolienne selon l'une des revendications précédentes, **caractérisée en ce que** l'un des modules actifs (62) est réalisé sous la forme d'un limiteur variable pour une sortie de puissance réactive capacitive.

7. Éolienne selon la revendication 6, **caractérisée en ce que** le limiteur comprend un dispositif statique de limitation (62').

8. Éolienne selon l'une des revendications précédentes, **caractérisée en ce que** l'un des modules actifs (63) est réalisé sous la forme d'un dispositif de commande de surintensité qui règle une sortie de puissance réactive inductive accrue par rapport à la sortie de puissance réactive nominale, laquelle est de préférence supérieure à une puissance réactive nominale.

9. Éolienne selon la revendication 8, **caractérisée en ce que** la self réseau (4) et/ou un transformateur (8) sont dimensionnés de telle manière que même dans la partie supérieure de la plage de surtension la plus élevée (3), le courant réactif soit au maximum de 1,6 fois, de préférence au maximum de 1,1 fois, le courant réactif nominal.

10. Éolienne selon la revendication 8 ou 9, **caractérisée en ce que** le dispositif de commande de surintensité (63) est réalisé de manière à comporter plusieurs niveaux, dans laquelle, à un deuxième niveau (63"), il est prévu une sortie de puissance réactive inductive accrue qui est de préférence égale au double de la sortie de puissance réactive nominale.

11. Éolienne selon l'une des revendications précédentes, **caractérisée en ce que** l'un des modules actifs (64) est réalisé sous la forme d'un curseur de tension nominale pour la tension dans le circuit intermédiaire (31), qui comprend de préférence un dispositif statique de tension.

12. Éolienne selon la revendication 11, **caractérisée en ce que** le dispositif statique de tension est divisé en plusieurs zones, dans laquelle au moins deux zones forment de préférence une fonction de rampe, dont une zone présente une valeur constante accrue.

13. Éolienne selon la revendication 11 ou 12, **caractérisée en ce qu'**il est prévu un élément de rampe (64') dans lequel une pente de rampe plus que proportionnelle est mise en œuvre.

14. Éolienne selon l'une des revendications précédentes, **caractérisée en ce que** l'un des modules actifs (65) est réalisé sous la forme d'un élément de surmodulation qui augmente la tension délivrée par le convertisseur (3).

15. Éolienne selon la revendication 14, **caractérisée en ce qu'**une augmentation à au moins 1,05 fois la valeur maximale sans surmodulation est obtenue par surmodulation, de préférence jusqu'à au moins 1,07 fois.

16. Éolienne selon la revendication 14 ou 15, **caractérisée en ce que** l'élément de surmodulation est réglé à un facteur de distorsion d'au plus 20 %.

17. Éolienne selon l'une des revendications 14 à 16, **caractérisée en ce qu'**il est prévu un dispositif statique de commande pour l'élément de surmodulation, dans lequel une fonction de rampe plus que proportionnelle est mise en œuvre.

18. Éolienne selon l'une des revendications précédentes, **caractérisée en ce que** l'un des modules actifs (66) est réalisé sous la forme d'un activateur supplémentaire destiné à un hacheur (32) du convertisseur (3) et comporte une sortie de commande pour l'activation du hacheur.

19. Éolienne selon l'une des revendications précédentes, **caractérisée en ce qu'**il est prévu un module d'adaptation de fréquence (77) qui interagit avec le classificateur de surtension (70) de telle manière que, pour une fréquence réseau inférieure à une fréquence réseau nominale, la classification s'effectue avec des valeurs réduites et qu'une tension maximale soit de préférence réduite.

20. Éolienne selon l'une des revendications précédentes, **caractérisée en ce qu'**un transformateur d'installation (8) présent sur la ligne de raccordement (19) est dimensionné de telle manière qu'il soit magnétiquement saturé dans la plage de surtension à des fréquences réseau inférieures à une fréquence réseau nominale.
